# EUROPEAN PATENT APPLICATION

(11) **EP 2 584 562 A1**
(43) Date of publication of application: **24.04.2013**
(21) Application number: 12155073.5
(22) Date of filing: 13.02.2012
(51) Int. Cl.: G11B 27/034, G11B 27/34

(54) **Real-time image editing method and electronic device**

(30) Priority: 18.10.2011 TW 100137645
(71) Applicant: Acer Incorporated, Taipei Hsien 221 (TW)
(72) Inventor: Yang, Shih-Yu, 221 Taipei Hsien (TW); Chuang, Ya-Chi, 221 Taipei Hsien (TW)
(74) Representative: Becker Kurig Straus

(57) **Abstract**

A real-time image editing method for an electronic device having a touch panel is provided. The method includes the steps of executing a recording program, a timing program and an image editing program, showing an image editing option menu when detecting an input signal, receiving at least one select signal of a user via the image editing option menu and generating an editing result, storing the editing result in a register, and when the recording program stops, the image editing program generates an output video according to the editing result and a raw video generated by the recording program.

## Description

### CROSS REFERENCE TO RELATED APPILCATIONS

This Application claims priority of Taiwan Patent Application No. 100137645, filed on Oct. 18, 2011, the entirety of which is incorporated by reference herein.

### BACKGROUND OF THE INVENTION

### Field of the Invention

The invention provides an image editing method, especially to real-time image editing during video recording.

### Description of the Related Art

When a user records video files by a recorder, mobile phone with camera function or other portable devices, the recorded video files are usually transferred to a computer (personal computer or laptop) for editing. The video editing is usually implemented by a video editing program, and if the video editing program is not installed in the computer, or the format of the video file is not supported by the video editing program, the user has to find other video editing programs. This causes inconvenience for the user.

### BRIEF SUMMARY OF THE INVENTION

An embodiment of the invention provides a real-time image editing method for an electronic device having a touch panel. The method includes the steps of executing a recording program, a timing program and an image editing program, showing an image editing option menu when detecting an input signal, receiving at least one select signal of a user via the image editing option menu and generating an editing result, storing the editing result in a register, and when the recording program stops, the image editing program outputs an output video according to the editing result and a raw video generated by the recording program.

Another embodiment of the invention provides an electronic device that can apply real-time video editing on a raw video generated by a recording program when the recording program is running. The electronic device comprises a timer, a touch panel, an image editing program and a register. The timer is activated when the recording program is executed to transmit a time of an image editing event to the image editing program. When the touch panel has been touched, a signal is transmitted to the image editing program, and the image editing program then shows an image editing option menu to receive at least one selection signal from a user to generate an editing result, and when the recording program stops, the image editing program outputs a video file according to the editing result and the raw video.

A detailed description is given in the following embodiments with reference to the accompanying drawings.

### BRIEF DESCRIPTION OF THE DRAWINGS

The present invention can be more fully understood by reading the subsequent detailed description and examples with references made to the accompanying drawings, wherein:

Fig. 1 is a flowchart of a real-time image editing method according to an embodiment of the invention.

Fig. 2 is a schematic diagram of an embodiment of an image editing option menu according to the invention.

Fig. 3 is a schematic diagram showing an image editing operation according to an embodiment of the invention.

Fig. 4 is a schematic diagram of an electronic device with a real-time image editing function according to an embodiment of the invention.

Fig. 5 is a schematic diagram of an electronic device with a real-time image editing function according to another embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

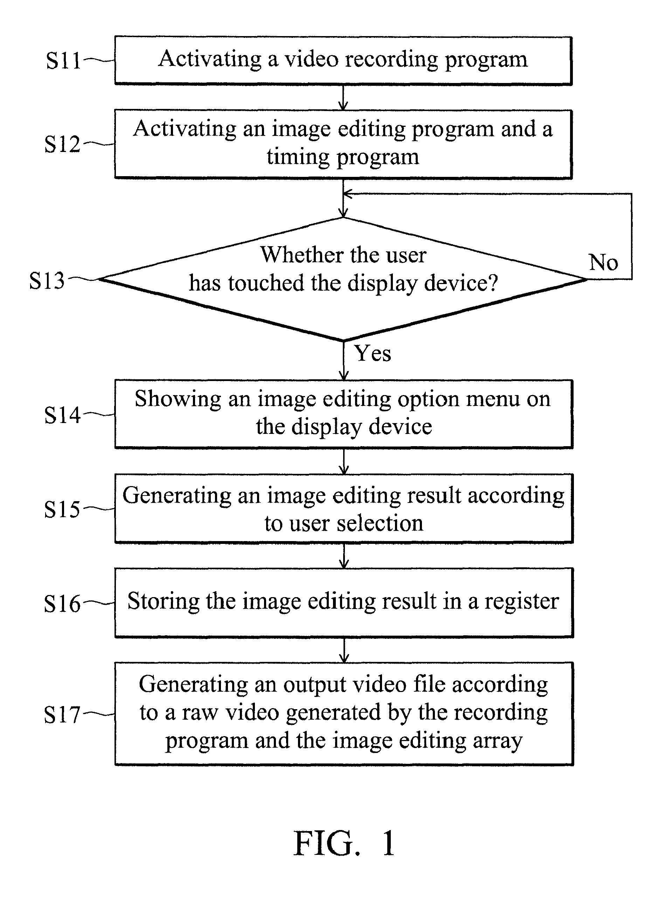

Fig. 1 is a flowchart of a real-time image editing method according to an embodiment of the invention. The embodiment illustrates a portable device with a video recording function. The portable device may be a smart phone, a tablet, a camera or a handheld recorder. The embodiment does not limit the image editing method to still image editing. The embodiment can be applied in a motion image or a video file. In step S11, a user records via a physical button of the portable device or an option menu. In step S12, the user selects a real-time image editing function and an image editing program and a timing program of the portable device are then activated. In the embodiment, the real-time image editing function is implemented by the image editing program. In other embodiments, the steps S11 and S12 can be integrated in one step. This means that when the user records video, executes a recording program or enables a video recording function, the real-time image editing function and the timing program are activated simultaneously. The timing program records the time of any operation of the user. In other words, the timing program provides a timestamp for the operation that the user made via the real-time image editing program.

When recording video, a control unit of the portable device shows a current captured frame on a display device of the portable device. In this embodiment, the display device is a touch panel. In step S13, a controller of the portable device detects whether an input signal is received, wherein the input signal is generated when the user has touched the display device. If the user does not touch the display device, steps following step S13 do not occur until the user has touched the display device or stops recording.

When the controller detects that the user has touched the display device, step S14 is executed. The control system of the portable device shows an image editing option menu on the display device of the portable device. The user selects desired image elements, special effect or inputs text via the image editing option menu. In the step S15, the control unit of the portable device or the image editing program generates an image editing result according to user selection. The control unit of the portable device or the image editing program transforms a plurality of image editing results into an image editing array which is a 7xN array. The content of the image editing result can be shown as follows:

(No., component_name, time, Locate1_x, Locate1_y, Locate2_x, Locate2_y)

, wherein the parameter No. indicates a number of times that the image or the video has been edited by the user during video recording. The parameter component_name represents the name of user's selected image element or used special effect. If a user selects an text input option to edit the image or video by inputting text, the parameter component_name comprises not only the name of the text input option, but also the content that user had been input. The parameter time represents a time the user touched the display device, wherein the time is synchronized with a recording time. For example, when the user starts recording, the timer counts time from 00:00:00. If the user has touched the touch panel at the time 00:03:23, the time that the image editing is made is stored as 00:03:23. The parameters Locate1_x. Locate1_y, Locate2_x and Locate2_y represent two coordinates of the image element that are selected by the user on the touch screen.

After the user finishes the image editing, the image editing program stores the image editing result in a register (step S16). When the user stops recording, the step S17 is executed. The electronic device generates an output video file according to a raw video generated by a recording program and the image editing array, wherein the output video file comprises the image editing made by the user during the video recording.

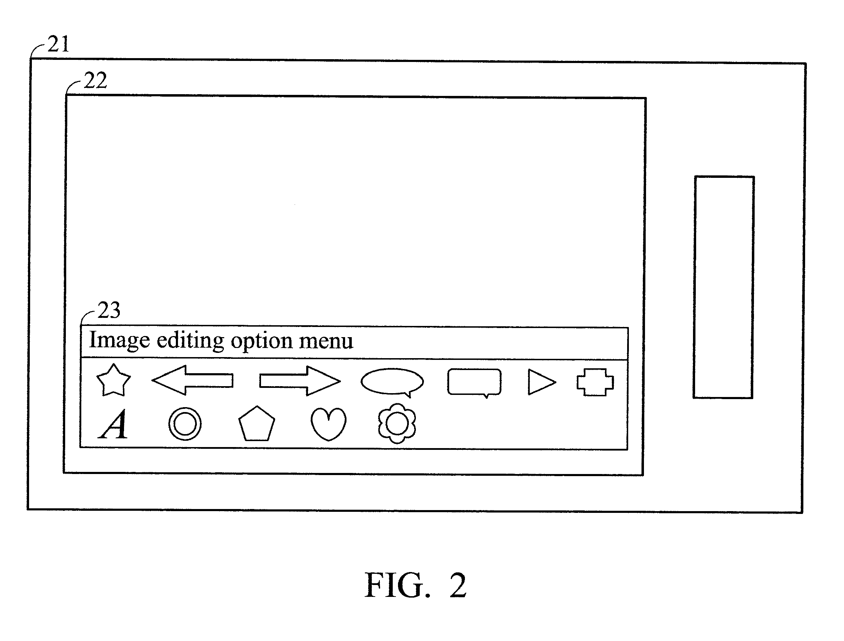

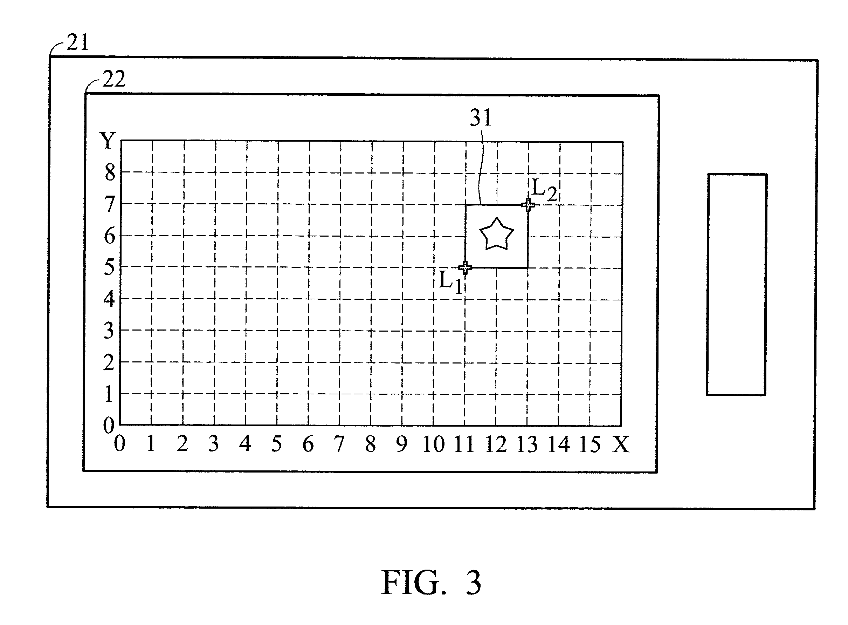

For further illustration, please refer to Figs. 2 and 3. Fig. 2 is a schematic diagram of an embodiment of an image editing option menu according to the invention. When a control unit of the portable device 21 detects that the screen 22 has been touched by a user during video recording, an image editing option menu 23 pops out and is displayed on the screen 22. When the user selects one image element via the image editing option menu, a response of the portable device 21 occurs. Reference may be made to Fig. 3, for the description of the response. Fig. 3 is a schematic diagram showing an image editing operation according to an embodiment of the invention. When the user selects the image element, the image editing program shows a coordinate grid on the screen 22. It is noted that an area covered by the coordinate is smaller than an actual display area of the screen 22. In another embodiment, the coordinate grid is shown when the image editing option menu pops out.

A user can move, rotate, zoom in or zoom out the element 31. If a multi-touch function is supported by the portable device 21, the element 31 is moved, rotated, zoomed in or zoomed out according to a user's gesture. When a location of the element 31 is determined, the image editing program stores and writes coordinates of points L 1 and L2 to an image editing array. It is noted that only the coordinate of point L2 is changeable when element 31 is rotated, zoomed in or zoomed out. The coordinate of point L1 is fixed when the location of the element 31 is determined.

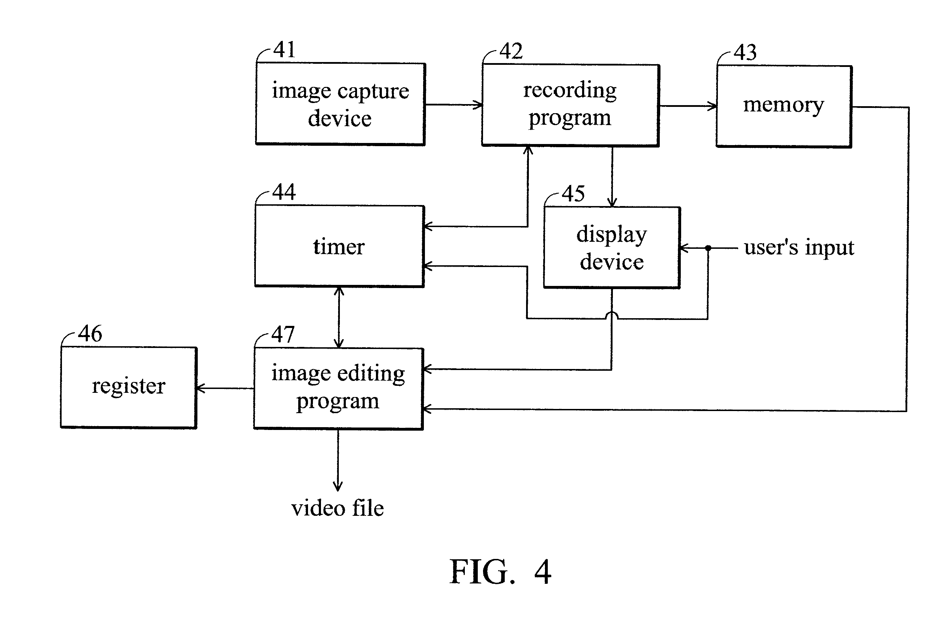

Fig. 4 is a schematic diagram of an electronic device with a real-time image editing function according to an embodiment of the invention. When the recording program 42 is activated, the recording program 42 transmits images captured by an image capture device 41 to a memory 43 and a display device 45. The display device 45 therefore shows the current images captured by the image capture device 41. In other embodiments, the image capture device 41 directly transmits the currently captured images to the display device 45. The memory 43 is a main memory of the electronic device for temporarily storing a raw video.

When the recording program 42 is activated, the timer 44 is activated too. The timer starts counting time when the recording program starts recording. When an image editing program 47 is activated, the image editing program 47 detects whether the display device 45 has been touched by a user. In other embodiments, the display device 45 detects whether the user has touched the display device 45, and when the display device 45 has been touched, the display device 45 transmits a notification to the image editing program 47. When detecting that the user has touched the display device 45, the image editing program 47 shows an image editing option menu on the display device 45. The user can select desired image elements, special effects or input text via the image editing option menu. Furthermore, when detecting that the user has touched the display device 45, the image editing program 47 acquires a first time from the timer 44 or the timer 44 automatically transmits the first time to the image editing program 47, wherein the first time is the time that the user has touched the display device 45.

After the image editing, the image editing program 47 transmits and stores parameters generated according to a user's image editing operation in the register 46. The image editing result comprises seven parameters. Assuming the user had edited the video or image for N times during the video recording, the register 46 stores a 7xN image editing array. After finishing the video recording, the image editing program 47 acquires a raw video and edits the raw video according to the image editing array stored in the register 46 to output an edited video file.

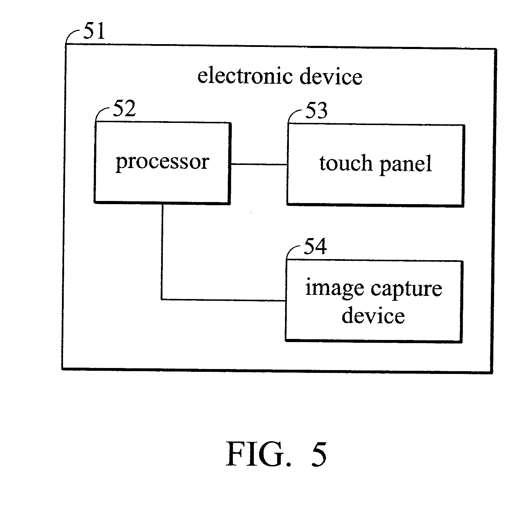

Fig. 5 is a schematic diagram of an electronic device with a real-time image editing function according to another embodiment of the invention. The user can record video and edit the video at the same time. The electronic device 51 comprises a processor 52, a touch panel 53 and an image capture device 54. When a recording program is executed, the processor 52 executes an image editing program to edit a raw video generated by the recording program. The recording program records via the image capture device 54. When the touch panel 53 detects an input signal, the image editing program shows an image editing option menu on the touch panel 53. The input signal is determined when the touch panel 53 has been touched.

The user then edits the raw video via the image editing option menu to generate an image editing result. The user selects an image element via the image editing option menu and the image editing program shows a coordinate grid on the touch panel 53. The user then determines a location of the image element and may apply other operations on the image element, such as rotation, zoom in or zoom out. The image editing program generates an image editing result according to user's operations via the image editing option menu and the editing result is stored in a register. When the recording program stops, the image editing program outputs an output video file according to the image editing result and a raw video generated by the recording program.

Furthermore, the processor 52 may generate and store an image editing array according to a plurality of image editing results. When the recording program stops, the image editing program outputs the output video file according to the image editing array and the raw video generated by the recording program.

The content of the image editing result can be shown as following:

(No., component_name, time, Locate1_x, Locate1_y, Locate2_x, Locate2_y)

, wherein the parameter No. indicates a number of times that the image or the video has been edited by the user during video recording. The parameter component_name represents the name of a user's selected image element or used special effect. If a user selects an text input option to edit the image or video by inputting text, the parameter component_name comprises not only the name of the text input option, but also the content that user had been input. The parameter time represents a time that the user touched the display device, wherein the time is synchronizes with a recording time. For example, when the user starts recording, the timer counts time from 00:00:00. If the user has touched the touch panel at the time 00:03:23, the time that the image editing is made is stored as 00:03:23. The parameters Locate1_x, Locate1_y, Locate2_x and Locate2_y represent two coordinates of the image element that are selected by the user on the touch screen.

In this embodiment, when the touch panel 53 has been touched, the timing program actively transmits a time to the image editing program and the image editing program stores the time in the image editing result. In other embodiments, when detecting that the touch panel 53 has been touched, the image editing program transmits a request to the timing program, receives an editing time from the timing program and stores the editing time to the image editing result.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A real-time image editing method for an electronic device having a touch panel, comprising:
executing a recording program, a timing program and an image editing program;
showing an image editing option menu when detecting an input signal;
receiving at least one select signal of a user via the image editing option menu and generating an editing result;
storing the editing result in a register; and
generating an output video according to the editing result and a raw video generated by the recording program, by the image editing program, when the recording program stops.

2. The method as claimed in claim 1, further comprising:
generating an image editing array according to a plurality of editing results; and
generating video according to the image editing array and the raw video generated by the recording program, by the image editing program, when the recording program stops.

3. The method as claimed in claim 1, wherein the editing result comprises a name of an image element, an editing time that the editing result has been made, and a coordinate of the image element.

4. The method as claimed in claim 1, wherein when detecting the input signal, the timing program transmits a time to the image editing program and the image editing program stores the time to the editing result.

5. The method as claimed in claim 1, wherein when detecting the input signal, the image editing program acquires a time from the timing program and stores the time to the editing result.

6. The method as claimed in claim 1, wherein the input signal is generated when the touch panel has been touched.

7. The method as claimed in claim 1, wherein the raw video is stored in a memory of the electronic device.

8. The method as claimed in claim 1, further comprising:
selecting an image element from the image editing option menu;
showing a coordinate grid;
determining a location of the image element; and
generating the editing result according to the image element and the location.

9. An electronic device that can apply a real-time video editing on a raw video generated by a recording program when the recording program is running, the device comprising:
a timer that is activated when the recording program is executing;
a touch panel;
an image editing program; and
a register, wherein when the touch panel has been touched, a signal is transmitted to the image editing program, and the image editing program then shows an image editing option menu to receive at least one selection signal from a user to generate an editing result, and when the recording program stops, the image editing program outputs a video file according to the editing result and the raw video.

10. The device as claimed in claim 9, wherein the image editing program generates an image editing array according to a plurality of editing results stored in the register, and when the recording program stops, the image editing program outputs the video file according to the image editing array and the raw video.

11. The device as claimed in claim 9, wherein the raw video is stored in a memory of the electronic device.

12. The device as claimed in claim 9, wherein the editing result comprises a name of an image element, an editing time that the editing result has been made, and a coordinate of the image element.

13. The device as claimed in claim 12, wherein when the touch panel has been touched, the timer transmits the editing time to the image editing program and the image editing program stores the editing time to the editing result.

14. The device as claimed in claim 12, wherein when detecting that the touch panel has been touched, the image editing program transmits a request to the timer, receives the editing time from the timer and stores the editing time to the editing result.

15. The device as claimed in claim 9, the image editing program shows a coordinate grid on the touch panel when the user edits the raw video via the image editing option menu.
